Europäisches Patentamt

European Patent Office

Office européen des brevets

(19)

(11) Veröffentlichungsnummer: **0 209 139**
**B1**

(12) **EUROPÄISCHE PATENTSCHRIFT**

(45) Veröffentlichungstag der Patentschrift:
18.10.89

(21) Anmeldenummer: **86109832.5**

(22) Anmeldetag: **17.07.86**

(51) Int. Cl.⁴: **F 16 B 21/02**

(54) **Axiale Bolzensicherung.**

(30) Priorität: **18.07.85 DE 3525952**
**18.07.85 DE 3525953**

(43) Veröffentlichungstag der Anmeldung:
**21.01.87 Patentblatt 87/4**

(45) Bekanntmachung des Hinweises auf die Patenterteilung:
**18.10.89 Patentblatt 89/42**

(84) Benannte Vertragsstaaten:
**AT CH DE FR GB IT LI SE**

(56) Entgegenhaltungen:
**DE-C- 952 043**
**FR-A- 725 583**
**FR-A- 1 555 321**
**US-A- 3 145 441**

**SOVIET INVENTIONS ILLUSTRATED, Sektion Mechanik,**
**Woche K20, 29. Juni 1983, Zusammenfassungsnr. G7290**
**Q61, Derwent Publications Ltd., London, GB; & SU - A -**
**941 720 (BELGOROD BR ATOM EN) 17.07.1982**

(73) Patentinhaber: **Nixdorf Computer Aktiengesellschaft,**
**Fürstenallee 7, D-4790 Paderborn (DE)**

(72) Erfinder: **Le, Thanh-Son, Dipl.-Ing., Hauptstrasse 135,**
**D-1000 Berlin 62 (DE)**

(74) Vertreter: **Schaumburg, Thoenes & Englaender,**
**Mauerkircherstrasse 31 Postfach 86 07 48,**
**D-8000 München 80 (DE)**

## Beschreibung

Die Erfindung betrifft eine Bolzensicherung nach dem Oberbegriff des Patentanspruches 1. Hierbei ist der Bolzen herausnehmbar und in der Lage, sich selbst axial gegen Herausfallen aus den Bohrungen der verbundenen Teile zu sichern (siehe z.B. US-A-3 145 441).

Es ist bekannt, bei Bolzenverbindungen die Bolzen durch axiale Sicherungselemente wie Sprengringe, Sicherungsringe und Splinte oder durch verzahnte federnde Sicherungsscheiben und ähnliche Elemente zu sichern. Bei der Anwendung axialer Sicherungselemente müssen beide Seiten der Bolzenverbindung für den Einbau des Bolzens und der axialen Sicherungselemente offen und zugänglich sein. Deshalb ist bei Bolzenverbindungen, bei welchen der Einbau der Bolzen durch die Konstruktion nur von einer Seite aus erfolgt, die Anbringung axialer Sicherungselemente nicht, oder nur mit hohem Aufwand z.B. an Sonderwerkzeugen möglich. Außerdem müssen bei Anwendung von Sprengringen bzw. Sicherungsringen die dafür vorgesehenen Nuten entweder am Bolzen selbst oder in den Bohrungen der verbundenen Teile vorgesehen sein.

Der Erfindung liegt die Aufgabe zugrunde, bei Bolzenverbindungen, insbesondere bei einseitig zugänglichen Bolzenverbindungen, die Bolzen unter Vermeidung separater axialer Sicherungselemente zu sichern, wobei einfache Bohrungen ohne besondere Ausnehmungen verwendbar sein sollen.

Die Aufgabe wird erfindungsgemäß durch die kennzeichnenden Merkmale des Patentanspruches 1 gelöst. Vorteilhafte Weiterbildungen sind Gegenstand der Unteransprüche.

Bei einer ersten Ausführungsform der Erfindung ist als Sicherungselement ein Sicherungsdraht vorgesehen. Der Sicherungsdraht ist durch seine beiden um ca. 90° zur Bolzenachse gebogenen Enden nicht ohne weiteres aus der Durchgangsbohrung des Bolzens herausnehmbar. Er ist dadurch ein Bestandteil des Bolzens und dient als axiales Sicherungselement. An der Einbauseite des Bolzens wird die Länge des um ca. 90° gebogenen Sperrendes des Sicherungsdrahtes maximal so gewählt, daß dessen Spitze gerade die zylindrische Oberfläche des Bolzens abschließt, so daß dieser nur in einer einzigen Stellung in die Bohrungen der verbundenen Teile eingeführt bzw. herausgenommen werden kann. An der freien Seite des Bolzens kann als Rastelement eine senkrecht zur Bolzenachse durchgehende Nut angebracht sein, in der ein gebogenes freies Ende des Sicherungsdrahtes formschlüssig in Verdrehrichtung einliegt. Dieses gebogene freie Ende ist so gebogen, daß es nur gegen seine axiale Federkraft in Bolzenachsenrichtung aus der Nut herausgedrückt werden kann. Durch den Formschluß zwischen Bolzen und dem gebogenen freien Ende wird die Position des gebogenen Sperrendes beim Ein- bzw. Ausbau des Bolzens stets eindeutig bestimmt. Die beiden Enden des Sicherungsdrahtes sind in gleicher Richtung gebogen, und die Bolzenlänge wird so gewählt, daß die beiden Enden im Einbauzustand gerade außerhalb der Bohrungen der verbundenen Teile liegen.

Nachdem der Bolzen in die Bohrungen der verbundenen Teile eingebaut worden ist und das gebogene Sperrende des Sicherungsdrahtes auf der Einbauseite des Bolzens bereits außerhalb der Bohrung eines verbundenen Teiles liegt, wird der Sicherungsvorgang eingeleitet. Dazu wird mit Hilfe eines einfachen Werkzeugs, z.B. einer Zange, das in der Nut befindliche gebogene freie Ende des Sicherungsdrahtes gegen seine axiale Federung herausgezogen und um 180° zur anderen Seite gedreht, so daß es wieder in die Nut einspringt. Dabei wird das gebogene Sperrende auch zur anderen Seite gedreht. Durch die um ein Maß e exzentrisch angelegte Durchgangsbohrung ragen die beiden Spitzen der Sicherungsdrahtenden um ein Maß 2e über die Bohrungsränder der verbundenen Teile hinaus, so daß der Bolzen in diesem Zustand durch die beiden gebogenen Sicherungsdrahtenden form- und auch kraftschlüssig axial gesichert ist.

Die Bolzenverbindung kann nur dann gelöst werden, wenn der Einbauzustand wiederhergestellt wird. Dazu wird das gebogene freie Ende des Sicherungsdrahtes mittels eines Werkzeugs aus der Nut herausgedrückt und dann zur Ausgangsstellung zurückgedreht, bis es wieder in die Nut einspringt. Nur in dieser einzigen Stellung kann der Bolzen herausgenommen werden. Der gelöste Bolzen ist wiederverwendbar, und der Sicherungsvorgang zur axialen Sicherung des Bolzens ist stets mit voller Wirkung reproduzierbar.

Es ist auch möglich, das Sicherungselement stabförmig mit scheibenförmigen Endabschnitten auszubilden, die einen mit dem Bolzenquerschnitt übereinstimmenden Querschnitt haben und mit dem Sicherungselement exzentrisch verbunden sind.

Auch dadurch lassen sich die vorstehend erläuterten Eigenschaften der axialen Sicherung einer Bolzenverbindung erzielen.

Eine Sperreinrichtung an der freien Seite der Bolzenverbindung kann die relative Lage zwischen Bolzen und Sicherungsteileelement fixieren, so daß die Bolzenverbindung nur gezielt gelöst werden kann. Als Sperreinrichtung kann eine Sperrzunge, eine Sperrkugel, ein Sperrstift u.ä. vorgesehen sein. Um die Bolzenverbindung lösen zu können, muß zunächst die Sperrwirkung der Sperreinrichtung aufgehoben werden, dann wird das freie Ende des Bolzens um 180° in die Ausgangsstellung zurückgedreht, danach kann der Bolzen herausgezogen werden. Durch entsprechende Gestaltung am Bolzen, am Sicherungselement und am Sperrende sowie am freien Ende kann eine Federkraft in Bolzenachsrichtung erzeugt werden, so daß die verspannten Teile dadurch noch zusätzlich gegeneinander verspannt werden.

Der Bolzen kann auch Vielkantprofil wie z.B. Vier-, Drei-, Sechskantquerschnitt usw. aufweisen. Dies ist insbesondere bei Dünnblech- und Kunststoffkonstruktionen von Vorteil, weil die dazu entsprechenden Vielkantbohrungen an verbundenen Teilen durch Ausstanzen und durch Gießen einfach hergestellt werden können. Die verbundenen Teile werden dadurch auch noch durch die Bolzen formschlüssig in Verdrehrichtung miteinander verbunden, so daß sie bei einer einzigen Bolzenverbindung nicht relativ zueinander verdreht werden können.

Die durch die Erfindung erzielten Vorteile bestehen darin, daß der Bolzen, insbesondere bei einseitig zugänglichen Bolzenverbindungen, ohne großen Aufwand axial formschlüssig gesichert wird, und daß zur axialen Bolzensicherung einer Bolzenverbindung keine separaten axialen Sicherungselemente benötigt werden, so daß der damit verbundene Fertigungsaufwand entfällt. Ferner sind die Lagerkosten der Bolzen durch Wegfallen axialer Sicherungselemente geringer und Ein- bzw. Ausbau des Bolzens ist schnell und einfach möglich. Es können keine losen Teile durch unvorsichtige Handhabung verlorengehen, und bei der Anwendung von Bolzen mit Vielkantquerschnitt werden die verbundenen Teile durch eine einzige Bolzenverbindung formschlüssig verdrehfest miteinander verbunden.

Ausführungsbeispiele der Erfindung sind in den Zeichnungen dargestellt und werden im folgenden näher beschrieben:

Fig. 1 zeigt den Längsschnitt einer Bolzenverbindung im eingebauten aber noch nicht gesicherten Zustand.

Fig. 2 zeigt die Ansicht a der Figur 1.

Fig. 3 zeigt den Längsschnitt einer Bolzenverbindung im gesicherten Zustand.

Fig. 4 zeigt die Ansicht b der Figur 3.

Fig. 5 zeigt die Vorderansicht eines axial selbstgesicherten Bolzens.

Fig. 6 zeigt den Längsschnitt einer Bolzenverbindung mit einem sechskantigen Bolzen im gesicherten Zustand.

Fig. 7 zeigt die Ansicht c der Figur 6.

Fig. 8 zeigt einen Längsschnitt einer weiteren Bolzenverbindung im eingesteckten Zustand.

Fig. 9 zeigt eine Seitenansicht der Figur 8.

Fig. 10 zeigt einen Längsschnitt der Bolzenverbindung nach Fig. 8 im gesicherten Zustand.

Fig. 11 zeigt die Seitenansicht der Figur 10.

Fig. 12 zeigt einen Längsschnitt des freien Endes.

Fig. 13 zeigt einen Längsschnitt des Sicherungsbleches.

Fig. 14 zeigt einen Längsschnitt des Bolzens, wobei ein Sicherungsteil in einer Durchgangsbohrung des Bolzens liegt.

Fig. 15 zeigt einen Längsschnitt des Sperrendes.

Fig. 16 zeigt die Seitenansicht der Figur 12.

Fig. 17 zeigt die Seitenansicht der Figur 13.

Fig. 18 zeigt die Seitenansicht der Figur 14.

Fig. 19 zeigt die Seitenansicht der Figur 15.

Fig. 20 zeigt einen Längsschnitt einer weiteren Bolzenverbindung im eingesteckten Zustand, wobei der Bolzen einen Vierkantquerschnitt hat.

Fig. 21 zeigt die Seitenansicht der Figur 20.

Fig. 22 zeigt einen Längsschnitt der Bolzenverbindung im gesicherten Zustand.

Fig. 23 zeigt die Seitenansicht der Figur 22.

Fig. 24 zeigt einen Sicherungsteil mit dem freien Ende.

Fig. 25 zeigt einen Längsschnitt des Sperrendes.

Fig. 26 zeigt die Draufsicht der Figur 24.

Fig. 27 zeigt einen Längsschnitt einer weiteren Bolzenverbindung im eingesteckten Zustand, wobei der Bolzen einen Dreikantquerschnitt aufweist und die verbundenen Teile in einem Abstand zueinander stehen.

Fig. 28 zeigt die Seitenansicht der Figur 27.

Fig. 29 zeigt einen Längsschnitt der Bolzenverbindung im gesicherten Zustand.

Fig. 30 zeigt die Seitenansicht der Figur 29.

Fig. 31 zeigt einen Längsschnitt des freien Endes.

Fig. 32 zeigt einen Längsschnitt eines Zwischenstücks.

Fig. 33 zeigt eine Vorderansicht des Bolzens.

Fig. 34 zeigt einen Längsschnitt eines Zwischenstücks.

Fig. 35 zeigt einen Längsschnitt des Sperrendes.

Fig. 36 zeigt die Seitenansicht der Figur 31.

Fig. 37 zeigt die Seitenansicht der Figur 32.

Fig. 38 zeigt die Seitenansicht der Figur 33.

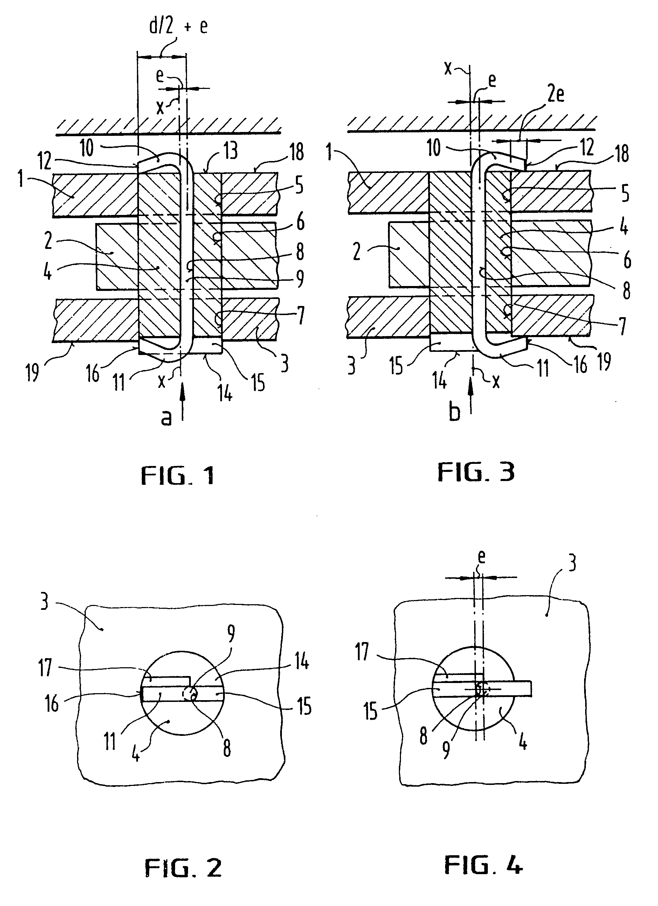

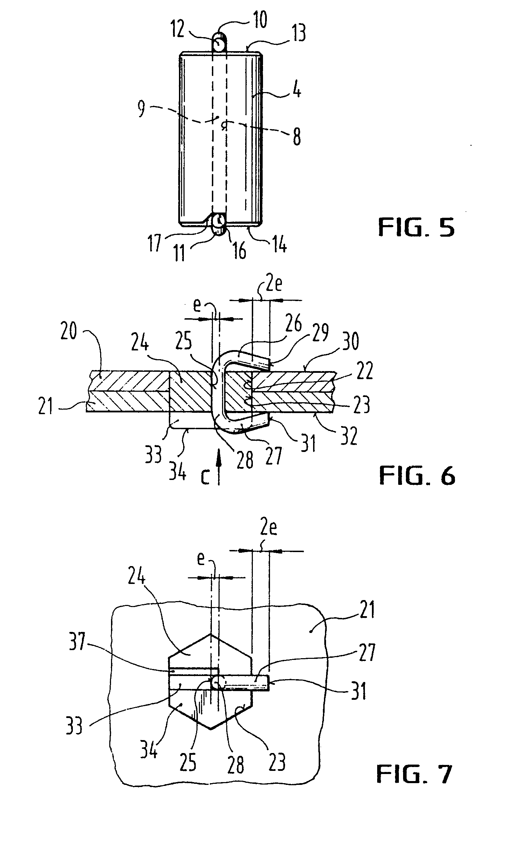

Bei dem Ausführungsbeispiel gemäß Figur 1 werden Teile 1, 2 und 3 durch einen Bolzen 4 über die Bohrungen 5, 6 und 7 miteinander verbunden. Der Einbau des Bolzens 4 ist nur in der Richtung a (Figur 1) möglich. Figur 1 zeigt den Längsschnitt dieser Bolzenverbindung im eingebauten aber noch nicht im gesicherten Zustand des Bolzens 4. Der Bolzen 4 hat im Bolzenschaft eine um ein Maß e exzentrisch zur Bolzenmittelachse x-x angebrachte Durchgangsbohrung. In der Durchgangsbohrung 8 befindet sich ein aus Federstahl bestehender Sicherungsdraht 9 mit zwei um ca. 90° zur Bolzenachse gebogenen Enden 10 und 11, welche so gebogen sind, daß sie in Bolzenachsenrichtung federn. Der Sicherungsdraht 9 ist dadurch nicht ohne weiteres aus der Durchgangsbohrung 8 herausnehmbar. Er ist ein fester Bestandteil des Bolzens 4 und dient zu dessen axialer Sicherung (Figur 5).

Auf der Einbauseite des Bolzens 4 drückt sich das gebogene Sperrende 10 des Sicherungsdrahtes 9 mit seiner Spitze 12 gegen die Stirnfläche 13 des Bolzens 4. Seine Länge ist auf ein Maß $d/2 + e$, wobei der Durchmesser des Bolzens 4 und e die Exzentrizität der Durchgangsbohrung 8 zur Bolzenachse ist, gewählt, so daß der Bolzen 4 nur in einer einzigen Lage in die Bohrungen der verbundenen Teile 1, 2, 3 eingeführt bzw. herausgenommen werden kann. Auf der freien Seite des Bolzens 4 ist an der Stirnfläche 14 eine durchgehende Nut 15 senkrecht zur Bolzenachse angebracht, in der das gebogene freie Ende 11 des Sicherungsdrahtes 9 mit seiner Spitze 16 formschlüssig in Verdrehrichtung einliegt (Figur 2). Es kann mittels eines einfachen Werkzeuges aus der Nut 15 herausgedrückt werden. Eine an der Nut 15 vorgesehene Schräge 17 erleichtert diesen Vorgang.

Die Bolzenlänge ist durch den Abstand der Oberflächen 18 und 19 der beiden verbundenen Teile 1 und 3 bestimmt und wird so gewählt, daß im eingebauten Zustand des Bolzens 4 das gebogene Sperrende 10 und das gebogene freie Ende 11 des Sicherungsdrahtes 9 über diese Oberflächen gerade hineinragt, so daß der durch Verdrehung des Sicherungsdrahtes 9 eingeleitete Sicherungsvorgang möglich wird. Nachdem der Bolzen 4 eingebaut worden ist und das gebogene Sperrende 10 des Sicherungsdrahtes 9 sich außerhalb der Bohrung 5 des Teiles 1 befindet, wird der Sicherungsvorgang eingeleitet. Mit Hilfe eines Werkzeuges wird das gebogene freie Ende 11 gegen seine Federkraft aus der Nut 15 herausgezogen und in Richtung der Schräge 17 um 180° gedreht, bis es wieder in die Nut 15 infolge seiner Federkraft zur anderen Seite formschlüssig einrastet (Figur 3, Figur 4). Dabei drückt seine Spitze 16 gegen die Oberfläche 19 des Teils 3. Auf der Einbauseite wird das gebogene Sperrende auch um 180° zur anderen Seite gedreht und drückt sich mit seiner Spitze 12 gegen die Oberfläche 18 des Teiles 1. Infolge der Exzentrizität der Durchgangsbohrung 4 ragt das gebogene Sperrende 10 und das gebogene freie Ende 11 nun um ein Maß 2e über die Bohrungsränder der Teile 1 und 3 hinaus (Fig. 3). Der Bolzen 4 sichert somit sich selbst axial gegen Herausfallen aus den Bohrungen der verbundenen Teile 1, 2, 3.

Durch den Formschluß zwischen Sicherungsdraht 9 und Bolzen 4 über das gebogene freie Ende 11 und die Nut 15 kann der Sicherungsdraht 9 im gesicherten Zustand seine Lage nicht verändern, auch wenn der Bolzen 4 sich um seine eigene Achse drehen würde.

Im gesicherten Zustand werden die beiden Sicherungsdrahtenden 10, 11 verspannt, so daß die verbundenen Teile 1, 2, 3 noch zusätzlich durch eine Vorspannkraft gegeneinander gedrückt werden. Um die Bolzenverbindung lösen zu können, muß der Einbauzustand wieder hergestellt werden. Dazu wird das gebogene freie Ende 11 mit Hilfe eines Werkzeuges, z.B. einer Zange, aus der Nut 15 herausgezogen und in die Ausgangsstellung zurückgedreht, bis es wieder in die Nut 15 einspringt. Nur in dieser einzigen Position des Sicherungsdrahtes 9 kann der Bolzen 4 herausgenommen werden.

Figur 6 zeigt den Längsschnitt einer Bolzenverbindung bei Dünnblechen bzw. Kunststoffteilen im gesicherten Zustand. Bei dieser Ausführung haben die beiden verbundenen Teile 20 und 21 einen ausgestanzten Innensechskant 22 und 23, in den ein Bolzen 24 mit passendem Sechskantprofil formschlüssig verdrehfest einliegt. Der sechskantige Bolzen 24 hat eine exzentrisch um ein Maß e zur Bolzenachse im Bolzenschaft angebrachte durchgehende Durchgangsbohrung 25, in der sich ein mit einem gebogenen Sperrende 26 und einem gebogenen freien Ende 27 versehener Sicherungsdraht 28 befindet, wobei sich das gebogene Sperrende 26 mit der Spitze 29 gegen die Oberfläche 30 und das gebogene freie Ende 27 mit der Spitze 31 gegen die Oberfläche 32 abstützt. Das gebogene freie Ende 27 liegt außerdem in einer durchgehenden Nut 33 mit Schräge 37 (Figur 7), die an einer Stirnfläche 34 des Bolzens 24 senkrecht zur Bolzenachse angebracht ist, formschlüssig in Verdrehrichtung ein.

Durch die beiden Enden 26, 27, die nun um ein Maß 2e über die Innensechskantränder hinausragen, wird der Bolzen 24 axial gegen Herausfallen gesichert.

Anders als bei zylindrischen Bolzen können die verbundenen Teile 20 und 21 durch den sechskantigen Bolzen 24 nicht relativ zueinander gedreht werden, so daß die Lagen der beiden Teile zueinander durch eine einzige Bolzenverbindung eindeutig bestimmt sind.

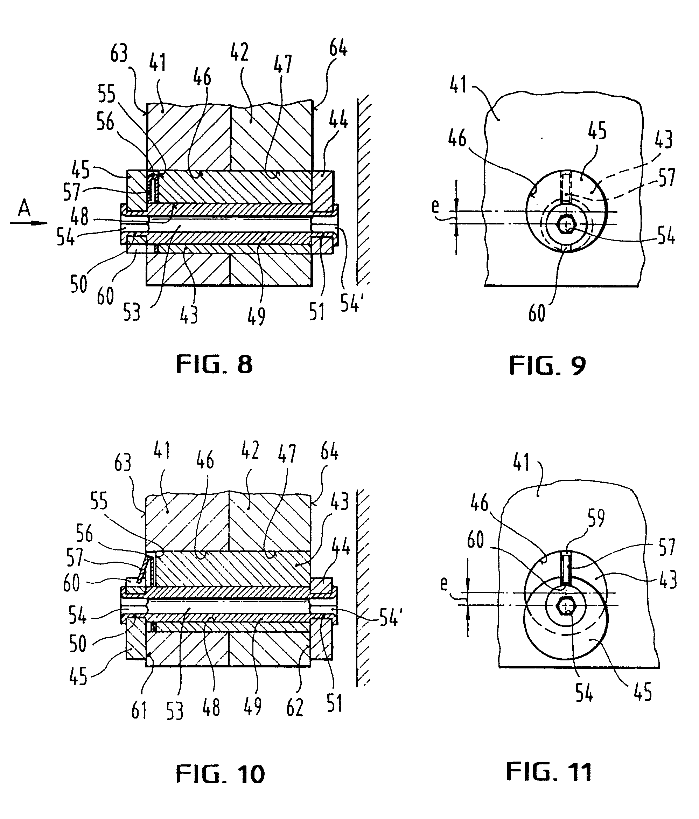

Bei dem Ausführungsbeispiel nach Figur 8 werden Teile 41 und 42 durch einen zylindrischen Bolzen 43 miteinander verbunden, wobei der Einbau des Bolzens 43 nur von der zugänglichen Seite A der Verbindungsstelle erfolgt. Figur 8 zeigt einen Längsschnitt einer Bolzenverbindung im eingesteckten Zustand, wobei der Bolzen 43 so durchgesteckt wird, daß das Sperrende 44 und das freie Ende 45 außerhalb der Durchgangsbohrungen 46 und 47 liegen.

Der Bolzen 43 weist eine um ein Maß e exzentrisch zur Bolzenmittelachse angebrachte Durchgangsbohrung 48 auf, in welcher ein Sicherungsteil 49 einliegt. Der Sicherungsteil 49 verbindet das Sperrende 44 und das freie Ende 45 über die beidseitig vorgesehenen Zapfen 50 und 51 kraftformschlüssig und verdrehfest, wobei die beiden Enden 44 und 45 einen gleichen Querschnitt wie der Bolzen 43 selbst aufweisen (Figur 9) und durch den Sicherungsteil 49 so verbunden werden, daß der Bolzen 43 gemeinsam mit den beiden Enden in die Durchgangsbohrung 46 und 47 in einer einzigen Stellung durchgesteckt werden kann. Der Sicherungsteil 49 ist in der Durchgangsbohrung 48 zwar drehbar, aber durch die beiden Enden 44 und 45 nicht herausnehmbar. Er ist dadurch ein fester Bestandteil des Bolzens 43 und dient zu dessen Sicherung. Ein so konstruierter Bolzen 43 hat auf der Einbauseite ein Sperrende 44 und auf der freien Seite ein freies Ende 45, welche relativ zum Bolzen 43 verdreht werden können und miteinander kraftformschlüssig verdrehfest verbunden sind.

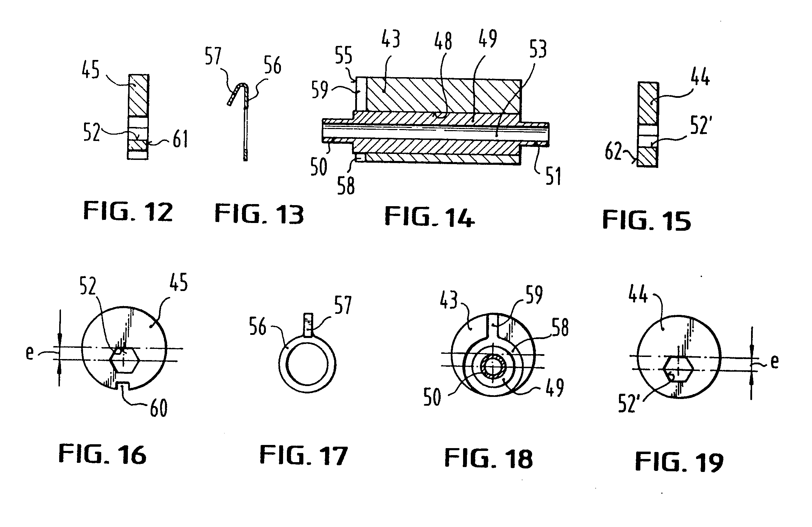

Um mit dem Sicherungsteil 49 kraftformschlüssig verbunden werden zu können, haben die beiden Enden 44 und 45 einen ebenfalls um ein Maß e zum Mittelpunkt exzentrischen durchgehenden Innensechskant 52 und 52' (Figuren 15, 16, 19). Nachdem der Sicherungsteil 49 in der Durchgangsbohrung 48 bereits einliegt, werden die beiden Enden 44 und 45 beidseitig auf die zylindrischen Zapfen 50 und 51 eingelegt. Danach werden die beiden Zapfen 50 und 51 über die Mittelbohrung 53 mittels eines Werkzeuges so verformt, daß beidseitig die Innensechskante 54 und 54' entstehen. Auf diese Weise werden die beiden Enden 44 und 45 kraftformschlüssig miteinander verdrehfest verbunden.

Zwischen der Stirnfläche 55 des Bolzens 43 und dem freien Ende 45 (Figuren 12, 16) ist ein Sicherungsblech 56 (Figuren 13, 17) mit der federnden Zunge 57 in einer um ein Maß e zur Bolzenmittelachse angeordneten Ringnut 58 (Figur 14, 18) eingelegt, wobei die federnde Zunge 57 in der Nut 59 einliegt. Die federnde Zunge 57 ist so angeordnet, daß sie stets von dem freien Ende 45 in der Nut 59 zusammengedrückt wird und nur in einer einzigen Stellung, wo das freie Ende 45 eine Nut 60 aufweist, kann sie in diese einspringen. Dieser Vorgang ergibt sich durch 180°-Drehung am freien Ende 45.

Nachdem der Bolzen 43 bereits wie in Figur 8 eingesteckt worden ist, wird der Sicherungsvorgang eingeleitet. Dazu wird das freie Ende 45 mittels eines Werkzeuges um einen Winkel von 180° verdreht, so daß die federnde Zunge 57 in die Nut 60 einspringt und diese Stellung festhält.

Durch die Exzentrizität übergreifen die Enden 44 und 45 beidseitig die Ränder der Durchgangsbohrungen 46 und 47 und liegen mit den Auflageflächen 61 und 62 auf den Oberflächen 63 und 64 an. Die Kontaktfläche zwischen diesen Teilen ist sichelförmig und hat eine breiteste Stelle in der Mitte mit einem Maß 2e (Figur 11).

Der Bolzen 43 ist nun durch die beiden Enden 44 und 45 versperrt und somit axial gesichert (Figur 10). Die relative Stellung des freien Endes 45 zum Bolzen 43 wird stets von der federnden Zunge 57 aufrechterhalten, so daß die Bolzenverbindung nur gezielt gelöst werden kann.

Um die Bolzenverbindung lösen zu können, wird zunächst die Zunge 57 aus der Nut 60 nach unten gedrückt, so daß das freie Ende 45 gleichzeitig um einen Winkel von 180° zur Ausgangsstellung zurückgedreht werden kann. Nur in dieser Stellung kann dann der Bolzen 43 herausgenommen werden. Mittels eines Stiftschlüssels kann das freie Ende 45 über den Innensechskant 54 am Sicherungsteil 49 gedreht werden. Die Länge des Bolzens 43 ist durch die gesamte Dicke der verbundenen Teile bestimmt und stets so gewählt, daß die beiden Enden 44 und 46 für die Einleitung des Sicherungsvorgangs mindestens gerade außerhalb der Durchgangsbohrungen liegen.

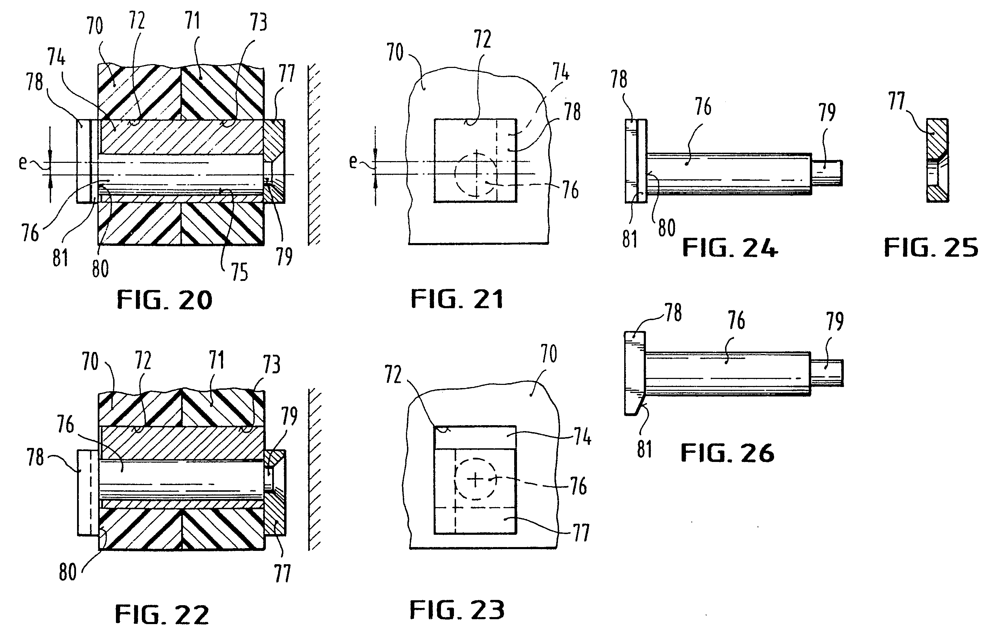

Das Ausführungsbeispiel nach Figur 20 zeigt eine Bolzenverbindung zweier aus Kunststoff bestehender Teile 70 und 71, die vierkantige durchgehende Ausnehmungen 72 und 73 aufweisen, die z.B. bei Gußteilen gleich mitgegossen sind.

Der Bolzen 74 hat einen entsprechenden Vierkantquerschnitt und eine um ein Maß e exzentrisch zur Bolzenmittelachse liegende Durchgangsbohrung 75, in der ein Sicherungsteil 76 mit einem Sperrende 77 und einem freien Ende 78 einliegt. Das freie Ende 78 ist stoffschlüssig mit dem Sicherungsteil 76 verbunden und das Sperrende 77 ist durch Vernietung am Zapfen 79 kraftformschlüssig mit diesem verbunden. An der Auflagefläche 80 des freien Endes 78 ist eine Schräge 81 angebracht, die zur Erleichterung des Sicherungsvorgangs und gleichzeitig zum Verspannen der beiden verbundenen Teile dient (Figuren 24, 25, 26).

Nachdem der mit den beiden Enden 77 und 78 versehene Bolzen 74 bereits in die Ausnehmungen 72 und 73 eingesteckt worden ist (Figuren 20, 21), wird der Sicherungsvorgang eingeleitet. Dazu wird das freie Ende 78 und 180° verdreht, so daß die Enden 77 und 78 die Ränder der Ausnehmung 72 und 73 übergreifen (Figuren 22, 23). Dabei werden die verbundenen Teile 70 und 71 durch die angebrachte Schräge 81 erst dann durch die Auflagefläche 80 derart so verspannt, daß hier eine Selbsthemmung zustandekommt, die die relative Stellung des freien Endes 78 zum Bolzen 74 festhält, ohne daß hier eine zusätzliche Sperreinrichtung benötigt wird. Im so gesicherten Zustand sind die beiden Teile 70 und 71 durch den Bolzen 74 nicht nur miteinander verspannt, sondern auch formschlüssig verdrehfest miteinander verbunden, so daß die relative Lage der beiden verbundenen Teile 70 und 71 dadurch mit einer einzigen Bolzenverbindung eindeutig bestimmt ist.

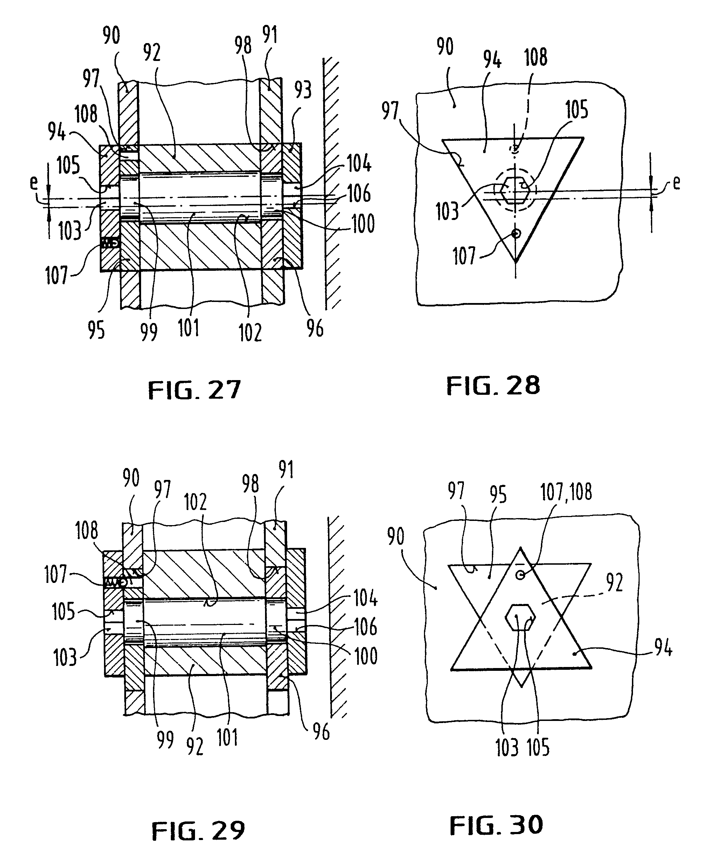

Bei dem Ausführungsbeispiel nach Figur 27 werden die Teile 90 und 91 durch einen Bolzen 92 so miteinander verbunden, daß sie in einem bestimmten Abstand zueinander stehen.

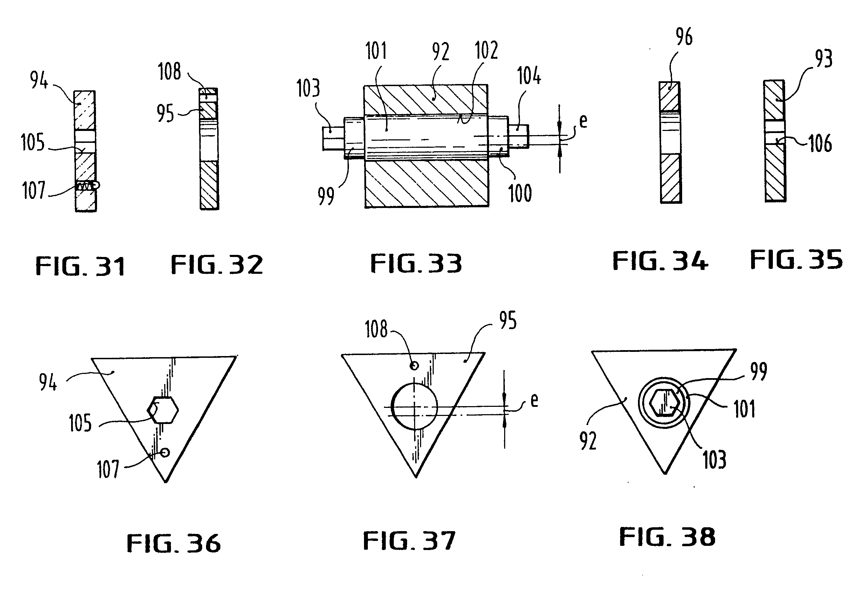

Bei dieser Ausführungsform haben der Bolzen 92, die beiden Enden 93 und 94 sowie die zwei zusätzlichen Zwischenstücke 95 und 96 übereinstimmenden Dreikantquerschnitt (Figuren 28, 36 bis 38), so daß die beiden Zwischenstücke 95 und 96 in entsprechenden Dreikantausnehmungen 97 und 98 formschlüssig einliegen und auf den Zapfen 99 und 100 eines Sicherungsteils 101 frei liegen. Der Sicherungsteil 101 ist in einer Durchgangsbohrung 102 mit dem Bolzen 92 verdrehfest verbunden. Dies ist notwendig, weil der Bolzen 92 nun mitgedreht werden muß. Auf Sechskantzapfen 103 und 104 des Sicherungsteiles 101 sind das freie Ende 94 und das Sperrende 93 stoffformschlüssig festgeklebt. Dazu haben die beiden Enden entsprechende Innensechskante 105 und 106. Der Bolzen 92 selbst bildet mit den beiden Enden 93 und 94 und den beiden Zwischenstücken 95 und 96 dadurch eine Bolzeneinheit (Figuren 31 bis 38).

Die Teile der Bolzeneinheit sind in der in Figur 31 bis 38 gezeigten Orientierung so zusammengebaut, daß sie in einer einzigen Stellung in die entsprechenden Dreikantausnehmungen 97 und 98 verbundener Teile 90 und 91 eingesteckt werden können (Figur 28).

Zur Feststellung seiner Lage im gesicherten Zustand hat das freie Ende 94 ein Feder-Sperrkugel-System (Figur 31), wobei die Sperrkugel 107 so angeordnet ist, daß sie nach einer 180°-Drehung am freien Ende 94 in die dafür vorgesehene Bohrung 108 am Zwischenstück 95 einrastet (Figuren 30, 36, 37).

Nachdem die Bolzeneinheit wie in Figur 27, 28 gezeigt eingesteckt worden ist, wird das freie Ende 94 um einen Winkel von 180° gedreht, so daß die Sperrkugel 107 in die Bohrung 108 einrastet, und die in Figur 29 und 30 gezeigte Stellung erreicht wird.

Der Bolzen 92 wird dabei durch den Stoffschluß mit dem Sicherungsteil 101 auch mitgedreht und klemmt mit den beiden Enden 93 und 94 die beiden verbundenen Teile 90 und 91 fest. Der genaue Abstand zwischen beiden verbundenen Teilen ist durch die Länge des Bolzens 92 bestimmt. Auf diese Weise wird durch den Bolzen 92 eine Distanzhülse zwischen beiden verbundenen Teilen 90 und 91 eingebaut. Beim Lösen der Bolzenverbindung kann die Sperrwirkung der Sperrkugel 107 durch eine kräftige Drehung am freien Ende 94 aufgehoben werden.

**Patentansprüche**

1. Axiale Bolzensicherung für insbesondere einseitig zugängliche lösbare Bolzenverbindungen, mit einem Bolzen (4, 24, 43, 74, 92) mit axialer Durchgangsbohrung (8, 25, 48, 75, 102), in der ein Sicherungselement (9, 28, 49, 76, 101) angeordnet ist, dadurch gekennzeichnet, daß die Durchgangsbohrung (8, 25, 48, 75, 102) exzentrisch zur Bolzenmittelachse (x-x) liegt und daß das Sicherungselement (9, 28, 49, 76, 101) etwa rechtwinklig zu seiner Längserstreckung verlaufende, außerhalb des Bolzens (4, 24, 43, 74, 92) liegende Endabschnitte (10, 11; 26, 27; 44, 45; 77, 78; 93, 94) hat, deren Länge, ausgehend von der Mitte des Sicherungselementes (9, 28, 49, 76, 101), größer ist als die Differenz des halben Bolzendurchmessers und der Exzentrizität der Durchgangsbohrung (8, 25, 48, 75, 102).

2. Bolzensicherung nach Anspruch 1, dadurch gekennzeichnet, daß ein in der Durchgangsbohrung (8) eingebauter Sicherungsdraht (9) ein Sperrende (10) und ein freies Ende (11) aufweist, die beide um ca. 90° zur Bolzenachse gebogen sind und daß an der Stirnfläche (14) auf der freien Seite des Bolzens (4) ein Rastelement (15) vorgesehen ist, mit dem das gebogene freie Ende (11) des Sicherungsdrahtes (9) verrastbar ist.

3. Bolzensicherung nach Anspruch 2, dadurch gekennzeichnet, daß das Sperrende (10) und das freie Ende (11) in gleicher Richtung so gebogen sind, daß sie in Bolzenachsenrichtung federn.

4. Bolzensicherung nach Anspruch 2 oder 3, dadurch gekennzeichnet, daß die Länge des an der Einbauseite des Bolzens (4) befindlichen Sperrendes (10) so bemessen ist, daß der Bolzen (4) nur bei einer einzigen Stellung von diesem in die Bohrung (5, 6, 7) der zu verbindenden Teile (1, 2, 3) ein- bzw. aus diesen ausgebaut werden kann.

5. Bolzensicherung nach einem der Ansprüche 2 bis 4, dadurch gekennzeichnet, daß sich im gesicherten Zustand die Spitze (12) des gebogenen Sperrendes (10) gegen die Oberfläche (18) des einen verbundenen Teiles (1) und die Spitze (16) des gebogenen freien Endes (11) gegen die Oberfläche (19) des anderen verbundenen Teiles (3) festdrückt, und daß das gebogene freie Ende (11) formschlüssig in einer Nut (15) einliegt.

6. Bolzensicherung nach Anspruch 5, dadurch gekennzeichnet, daß die Nut (15) an der Stirnfläche des Bolzens (4) eine Schräge (17) aufweist.

7. Bolzensicherung nach einem der Ansprüche 2 bis 6, dadurch gekennzeichnet, daß der Bolzen (24) einen Vielkantquerschnitt aufweist, und daß der jeweilige verbundene Teil (20, 21) den dazu passenden Innenvielkant (22, 23) aufweist.

8. Bolzensicherung nach Anspruch 7, dadurch gekennzeichnet, daß der Bolzen (24) ein Sechskantprofil aufweist und der Innenvielkant (22, 23) ein Innensechskant ist.

9. Bolzensicherung nach Anspruch 1, dadurch gekennzeichnet, daß die Endabschnitte (44, 45; 77, 78; 93, 94) des Sicherungselementes (49, 76, 101) gleichen Querschnitt wie der Bolzen (43, 74, 92) haben.

10. Bolzensicherung nach Anspruch 9, dadurch gekennzeichnet, daß zwischen dem Bolzen (43, 74, 92) und mindestens einem Endabschnitt (45, 78, 94) eine Sperreinrichtung (56, 81, 107) zur Festlegung der relativen Lage zueinander im gesicherten Zustand vorgesehen ist.

11. Bolzensicherung nach Anspruch 10, dadurch gekennzeichnet, daß die Sperreinrichtung ein Sicherungsblech (56) mit federnder Zunge (57) ist, die im gesicherten Zustand in eine dafür vorgesehene Nut (60) eines Endabschnitts (45) einspringt.

12. Bolzensicherung nach einem der Ansprüche 9 bis 11, dadurch gekennzeichnet, daß mindestens ein Endabschnitt (78) eine Schräge (81) an seiner Auflagefläche (80) aufweist.

13. Bolzensicherung nach Anspruch 10, dadurch gekennzeichnet, daß die Sperreinrichtung ein Feder-Sperrkugel-System (107) ist.

14. Bolzensicherung nach einem der Ansprüche 9 bis 12, dadurch gekennzeichnet, daß zwischen mindestens einem Endabschnitt (93, 94) und dem Bolzen (92) ein Zwischenstück (95, 96) vorgesehen ist, das in einer Ausnehmung (97, 98) des jeweiligen verbundenen Teils (90, 91) liegt und daß der Bolzen (92) mit dem Sicherungsteil (101) verdrehfest verbunden ist.

15. Bolzensicherung nach Anspruch 14, dadurch gekennzeichnet, daß die Zwischenstücke (95, 96) frei auf Zapfen (99, 100) des Bolzens (92) liegen.

16. Bolzensicherung nach Anspruch 14 oder 15, dadurch gekennzeichnet, daß die Zwischenstücke (95, 96) das gleiche Vielkantprofil wie der Bolzen (92) und die Endabschnitte (93, 94) haben.

## Claims

1. An axial pin securing device for use in especially unilaterally accessible, separable pin connections, including a pin (4, 24, 43, 74, 92) having an axial through bore (8, 25, 48, 75, 102) with a securing element (9, 28, 49, 76, 101) arranged therein, characterized in that the through bore (8, 25, 48, 75, 102) is disposed eccentrically relative to the pin central axis (x-x), said securing element (9, 28, 49, 76, 101) having end sections (10, 11; 26, 27; 44, 45; 77, 78; 93, 94) extending at approximately right angles relative to its length and being disposed exteriorly to the pin (4, 24, 43, 74, 92), the end sections having a length from the center of the securing element (9, 28, 49, 76, 101), greater than the difference between half the diameter of the pin and the eccentricity of the through bore (8, 25, 48, 75, 102).

2. The device according to claim 1, characterized in that a securing wire (9) inserted into the through bore (8) has a blocked end (10) and a free end (11), each end being bent at approximately 90° relative to the pin axis, and that a catch element (15) is provided at the end face (14) adjacent of the free end of the pin (4) for locking the bent free end (11) of the securing wire (9).

3. The device according to claim 2, characterized in that the blocked end (10) and the free end (11) are each bent in the same direction such that they are springy in the direction of the axis of the pin.

4. The device according to claim 2 or 3, characterized in that the blocked end (10) located at the installation side of the pin (4) has a length such that there is only one position of the pin in which the pin (4) can be inserted into the bore (5, 6, 7) of the parts to be joined (1, 2, 3) or removed therefrom.

5. The device according to one of claims 2 to 4, characterized in that in the secured state the tip (12) of the bent blocked end (10) is pressed against the surface (18) of one joined part (1), and the tip (16) of the bent free end (11) is pressed against the surface (19) of the other joined part (3), and that the bent free end (11) is positively fitting into a groove (15).

6. The device according to claim 5, characterized in that the groove (15) is provided with an incline (17) at the end face of the pin (4).

7. The device according to one of claims 2 to 6, characterized in that the pin (24) is provided with a polyhedral cross-section and that the respective joined part (20, 21) has the matching internal polyhedral cross section (22, 23).

8. The device according to claim 7, characterized in that the pin (24) has a hexagonal profile, and that the internal polyhedral cross section (22, 23) is an internal hexagon.

9. The device according to claim 1, characterized in that the end sections (44, 45; 77, 78; 93; 94) of the securing element (49, 76, 101) and the pin (43, 74, 92) have the same cross-section.

10. The device according to claim 9, characterized in that between the pin (43, 74, 92) and at least one end section (45, 78, 94) a locking means (56, 81, 107) is provided for fixing their relative position in a secured state.

11. The device according to claim 10, characterized in that the locking means is a securing plate (56) having a spring tongue (57) which in a secured state is caught in a groove (60) of an end seciton (45) provided therefor.

12. The device according to one of claims 9 to 11, characterized in that at least one end section (78) is provided with an incline (81) at its bearing surface (80).

13. The device according to claim 10, characterized in that the locking means is a spring and ball locking system (107).

14. The device according to one of claims 9 to 12, characterized in that an intermediate piece (95, 96) is provided between at least one end section (93, 94) and the pin (92), said piece being placed in a recess (97, 98) of the respective joined part (90, 91), and that the pin (92) is arranged in a torsion-resistant manner with the securing element (101).

15. The device according to claim 14, characterized in that intermediate pieces (95, 96) are freely supported on lugs (99, 100) of the pin (92).

16. The device of claim 14 or 15, characterized in that the intermediate pieces (95, 96) have the same polyhedral profile as the pin (92) and the end sections (93, 94).

## Revendications

1. Dispositif de sûreté pour l'immobilisation en sens axial d'une cheville notamment pour des assemblages par cheville démontable, accessibles d'un seul côté, avec une cheville (4, 24, 43, 74, 92) pourvue d'un trou de passage axial (8, 25, 48, 75, 102) dans lequel est disposé un élément d'arrêt (9, 28, 49, 76, 101) caractérisé en ce que le trou de passage (8, 25, 48, 75, 102) est excentré par rapport à l'axe médian de la cheville (x-x) et en ce que l'élément d'arrêt (9, 28, 49, 76, 101) a des parties d'extrémité (10, 11; 26, 27; 44, 45; 77, 78; 93, 94) situées en dehors de la cheville (4, 24, 43, 74, 92) qui s'étendent sensiblement à angle droit par rapport à son extension longitudinale, dont la longueur, en partant du milieu de l'élément d'arrêt (9, 28, 49, 76, 101) est supérieure à la différence entre la demie dimension transversale de la cheville et l'excentration du trou de passage (8, 25, 48, 75, 102).

2. Dispositif selon la revendication 1, caractérisé en ce qu'un fil métallique d'arrêt (9) monté dans le trou de passage (8) présente une extrémité d'arrêt (10) et une extrémité libre (11) qui sont toutes deux courbées à 90° environ par rapport à l'axe de la cheville et en ce qu'il est prévu sur la face frontale (14) sur le côté libre de la cheville (4) un élément cranté (15) avec lequel peut s'engager l'extrémité libre courbée (11) du fil métallique d'arrêt (9).

3. Dispositif selon la revendication 2, caractérisé en ce que l'extrémité d'arrêt (10) et l'extrémité libre (11) sont courbées dans la même direction, de telle sorte qu'elles ont un effet élastique dans la direction de l'axe de la cheville.

4. Dispositif selon la revendication 2 ou 3, caractérisé en ce que la longueur de l'extrémité d'arrêt (10) se trouvant du côté du montage de la cheville (4) est dimensionnée de manière telle que la cheville (4) ne peut être montée dans le trou (5, 6, 7) des pièces à assembler (1, 2, 3) ou extraite de ce trou que dans une seule position.

5. Dispositif selon l'une des revendications 2 à 4, caractérisé en ce que, à l'état d'immobilisation, la pointe (12) de l'extrémité d'arrêt courbée (10) s'appuie fermement contre la surface (18) d'une des pièces assemblées (1) et la pointe (16) de l'extrémité libre courbée (11) contre la surface (19) de l'autre pièce assemblée (3) et en ce que l'extrémité libre courbée (11) est tenue par encastrement de forme dans une rainure (15).

6. Dispositif selon la revendication 5 caractérisé en ce que la rainure (15) présente sur la face frontale de la cheville (4) un plan oblique (17).

7. Dispositif selon l'une des revendications 2 à 6, caractérisé en ce que la cheville (24) a une section droite à pans multiples et en ce que les pièces assemblées (20, 21) ont chacune respectivement un profil intérieur à pans multiples (22, 23) s'adaptant à cette section droite.

8. Dispositif selon la revendication 7 caractérisé en ce que la cheville (24) a un profil à six pans et le profil intérieur à pans multiples (22, 23) est un profil à six pans.

9. Dispositif selon la revendication 1 caractérisé en ce que les parties d'extrémité (44, 45; 77, 78; 93, 94) de l'élément d'arrêt (49, 76, 101) ont une même section droite que la cheville (43, 74, 92).

10. Dispositif selon la revendication 9 caractérisé en ce qu'il est prévu entre la cheville (43, 74, 92) et au moins une partie d'extrémité (45, 78, 94) un dispositif d'arrêt (56, 81, 107) destiné au maintien de leur position relative à l'état d'immobilisation.

11. Dispositif selon la revendication 10 caractérisé en ce que le dispositif d'arrêt est une tôle de sûreté avec une languette élastique (57) qui, à l'état d'immobilisation entre dans une rainure (60) prévue à cet effet dans une partie d'extrémité (45).

12. Dispositif selon l'une des revendications 9 à 11 caractérisé en ce qu'au moins une partie d'extrémité (78) présente une obliquité (81) sur sa surface d'appui (80).

13. Dispositif selon la revendication 10 caractérisé en ce que le dispositif d'arrêt est un system à ressort et à bille d'arrêt (107).

14. Dispositif selon l'une des revendications 9 à 12 caractérisé en ce qu'il est prévu entre au moins une partie d'extrémité (93, 94) et la cheville (92) une pièce intercalaire (95, 96) qui se loge dans un évidement (97, 98) de la pièce assemblée (90, 91) correspondante et en ce que la cheville (92) est calée en rotation avec la pièce d'arrêt (101).

15. Dispositif selon la revendication 14 caractérisé en ce que les pièces intercalaires (95, 96) sont libres sur une portée (99, 100) de la cheville (92).

16. Dispositif selon la revendication 14 ou 15, caractérisé en ce que les pièces intercalaires (95, 96) ont le même profil à pans multiples que la cheville (92) et les parties d'extrémité (93, 94).

FIG. 1

FIG. 3

FIG. 2

FIG. 4

FIG. 5

FIG. 6

FIG. 7

FIG. 8

FIG. 9

FIG. 10

FIG. 11

FIG. 12    FIG. 13    FIG. 14    FIG. 15

FIG. 16    FIG. 17    FIG. 18    FIG. 19

EP 0 209 139 B1

FIG. 20

FIG. 21

FIG. 24

FIG. 25

FIG. 22

FIG. 23

FIG. 26

EP 0 209 139 B1

**FIG. 27**

**FIG. 28**

**FIG. 29**

**FIG. 30**

FIG. 31  FIG. 32  FIG. 33  FIG. 34  FIG. 35

FIG. 36  FIG. 37  FIG. 38